(19)

Europäisches
Patentamt
European
Patent Office
Office européen
des brevets

(11) **EP 3 442 104 A1**

(12) **EUROPEAN PATENT APPLICATION**

(43) Date of publication:
**13.02.2019 Bulletin 2019/07**

(51) Int Cl.:
**H02M 1/42** *(2007.01)*          **H02M 7/483** *(2007.01)*
**H02M 7/217** *(2006.01)*

(21) Application number: **17186029.9**

(22) Date of filing: **11.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **General Electric Technology GmbH
5400 Baden (CH)**

(72) Inventors:
• **CLARE, Jon
  Nottingham, Nottinghamshire NG7 2RD (GB)**

• **TRAINER, David Reginald
  Stafford, ST17 4LX (GB)**
• **COSTABEBER, Alessandro
  Nottingham, Nottinghamshire NG2 2LE (GB)**
• **AMANKWAH, Emmanuel
  KY 428 Kwabenya (GH)**
• **JANKOVIC, Marija
  Nottingham, Nottinghamshire NG7 1HD (GB)**

(74) Representative: **Fischer, Michael Maria et al
General Electric Technology GmbH
GE Corporate Intellectual Property
Brown Boveri Strasse 7
5400 Baden (CH)**

(54) **VOLTAGE SOURCE CONVERTERS AND CONTROL THEREOF**

(57)      This application relates to methods and apparatus for control of a voltage source converter , VSC, (100), where each phase limb (101 a-c) of the VSC has a diode rectifier, DR, (105) for connecting to an AC network and which is operable with a controlled power factor at a point-of-common coupling (PCC). In such operation the voltage and current at the AC terminals (106-1, 106-2) of the DR (105) may be out of phase. Each phase limb (101a-c) also includes at least one chain-link circuit (109, 111) of a plurality of series connected cells (110, 112) that can be controllably switched to generate a controlled voltage across the chain link circuit, with the chain link circuit being coupled to at least one terminal of the DR. A controller (113) controls the chain link circuit(s) so as to generate a voltage across the DR based on a target AC waveform for the AC terminals (106-1, 106-2). The controller is configured to identify first periods during which the target AC waveform would be of the opposite polarity to the AC current at the AC terminals and, during said first periods, to control the chain link circuit(s) to apply a voltage to the first and second rectifier terminals as to not reverse bias the diodes required to conduct the AC current.

Figure 1

**Description**

This application relates to voltage source converters and to methods and apparatus for control of a voltage source converter, and especially to a voltage source converter for use in high voltage power distribution and in particular to the operation of a voltage source converter with controllable power factor.

High-voltage direct current (HVDC) electrical power transmission uses direct current for the transmission of electrical power. This is an alternative to alternating current electrical power transmission which is more common. There are a number of benefits to using HVDC electrical power.

In order to use HVDC electrical power transmission, it is typically necessary to convert alternating current (AC) electrical power to direct current (DC) and back again. Recent developments in the power electronics field have led to an increased use of voltage-source converters (VSCs) for AC-DC and DC-AC conversion. VSCs make use of switching elements, typically insulated gate bipolar transistors (IGBTs) connected with respective anti-parallel diodes, that can be controllably turned on and off.

Various designs of VSC are known. One proposed arrangement provides a phase limb for connecting each AC phase of the AC network to the DC network, where each phase limb comprises two converter arms for connecting an AC terminal for that phase to high-side and low-side DC terminals respectively. Each converter arm comprises a series connection of IGBTs that are switched together. The converter arms of a phase limb are typically switched in antiphase in a pulse-width modulated fashion. Typically there are three AC phase and hence three phase limbs and thus such a converter is sometimes referred to as a six-pulse bridge converter.

Another known type of VSC is the modular multilevel converter (MMC) in which each converter arm comprises a plurality of switching cells connected in series. Each cell comprises an energy storage element, for example a capacitor, with a switch arrangement such that the capacitor can be selectively connected in series between the terminals of the cell or bypassed. The series connection of such cells is sometimes referred to as a chain-link circuit or chain-link converter or simply a chain-link. The chain-link circuit can be switched in a desired sequence so as to provide a stepped voltage waveform across the chain-link circuit, which can provide efficient conversion between DC and AC with low distortion. Other designs of VSC are also known, for instance the Alternate-Arm-Converter (AAC) which includes a chain link circuit for voltage wave-shaping but also director switches to render a converter arm non-conducting for part of the AC cycle.

These VSC designs can provide good performance and offer bidirectional power exchange, i.e. they can operate to transfer power from the AC network to the DC network and also to transfer power from the DC network to the AC network. These VSC designs do however tend to have a high number of components which add to the cost and size of the VSC and tend to require complex control schemes. There is a general desire to keep costs low, and size can be a particular concern in some applications.

One type of VSC has been proposed, for example in WO2011/015227, for applications where unidirectional power exchange, from the AC network to the DC network is sufficient. The VSC includes a diode bridge rectifier as a front end for connecting to the AC network. At least one chain link circuit is connected in series or parallel with the diode bridge rectifier. In use the chain link circuit is operated to provide voltage wave-shaping to a voltage waveform that corresponds to a rectified version of the AC waveform. As described in WO2011/015227 this can provide efficient conversion from AC to DC using a VSC that can be implemented with fewer components than VSCs designed for bidirectional power exchange and with a relatively simple control scheme.

However there are a few limitations on how such a diode bridge rectifier converter should be operated in practice.

Embodiments of the present disclosure relate to improvements in operating a diode bridge rectifier converter.

Thus, there is provided a voltage source converter comprising at least one phase limb comprising:

a high side phase terminal and a low side phase terminal;

a diode bridge rectifier having first and second AC terminals for connecting the phase limb to an AC network, each of the first and second AC terminals being connected to each of the first and second rectifier terminals via one or more diodes;

at least one chain-link circuit comprising a plurality of series connected cells that can be controllably switched to generate a controlled voltage across the chain link circuit, the chain link circuit being coupled to at least one of the first and second rectifier terminals;

wherein the voltage source converter is operable such that, in use, an AC voltage at the first and second AC terminals may be out of phase with an AC current at the first and second AC terminals; and

wherein the voltage source converter further comprises a controller for controlling the at least one chain link circuit so as to generate a voltage across the first and second rectifier terminals so as to generate an AC waveform at the first and second AC terminals based on a target AC waveform; and

wherein the controller is configured to identify first periods during which the target AC waveform would be of the opposite polarity to the AC current at the first and second AC terminals and, during said first periods, to control the at least one chain link circuit to apply a voltage to the first and second rectifier terminals so as to not reverse bias the diodes required to conduct the AC current.

Embodiments thus relate to a diode-bridge rectifier voltage source converter (VSC) which is operable such that the voltage and current at the AC terminals of the diode bridge rectifier may be out of phase. Conventionally such operation would result in distorted AC waveforms as, at some point during the cycle, a voltage applied to the diode bridge rectifier would reverse bias the diodes required for conduction, with a resultant discontinuity in current. In embodiments of the present disclosure however the VSC is operated to identify any such periods and to control the voltage applied to diode-bridge rectifier so as to maintain conduction.

In some embodiments the controller is configured to control the at least one chain link circuit so as to apply substantially no voltage difference across the first and second rectifier terminals during the first periods.

The at least one chain link circuit may comprise a first chain link circuit connected between the high-side phase terminal and the low side phase terminal. Additionally or alternatively there may be a second chain link circuit connected in series with the diode bridge rectifier between the high-side phase terminal and the low side phase terminal. In some embodiments there may be both a first chain link circuit and a second chain link circuit. In such embodiments, during the identified first periods, the controller may be configured to control the second chain circuit to substantially cancel any voltage difference across the first and second rectifier terminals arising from the first chain link circuit. During periods when the target AC voltage is of the same polarity as the AC current, e.g. outside of the identified first periods, the controller may be configured to control the first chain link circuit and the second chain circuit so as to collectively provide a voltage across the first and second rectifier terminals that is a rectified version of the target AC waveform.

The first chain link circuit may comprise cells having an energy storage element and a half-bridge switch arrangement. The second chain link circuit may comprise cells having an energy storage element and a full-bridge switch arrangement.

The VSC may have a plurality of phase limbs. In some implementations the phase limbs may be connected in series between high-side and low-side DC terminals. In such a case, and where each phase limb has a first chain link circuit as described above, the controller may be configured to control the first chain link circuits of the phase limbs to maintain the DC voltages at the high-side and low-side DC terminals with defined limits.

The voltage source converter may be operable to provide a controlled power factor at a defined point of a connected AC network. Such operation would result in a phase difference between current and voltage at the AC terminals of the diode-bridge rectifier. The defined point of the connected AC network may be a point of common coupling (PCC). In some instances the controlled power factor may be a power factor of unity.

Aspects also relate to methods of control. In another aspect therefore there is provided a method of controlling a voltage source converter comprising at least one phase limb comprising:

a high side phase terminal and a low side phase terminal;

a diode bridge rectifier having first and second AC terminals connecting the phase limb to an AC network, each of the first and second AC terminals being connected to each of the first and second rectifier terminals via one or more diodes;

at least one chain-link circuit comprising a plurality of series connected cells that can be controllably switched to generate a controlled voltage across the chain link circuit, the chain link circuit being coupled to at least one of the first and second rectifier terminals;

wherein the method comprises:

controlling the at least one chain link circuit so as to generate a voltage across the first and second rectifier terminals so as to generate an AC waveform at the first and second AC terminals based on a target AC waveform wherein the AC voltage at the first and second AC terminals is out of phase with an AC current at the first and second AC terminals;

identifying first periods during which the target AC waveform would be of the opposite polarity to the AC current at the first and second AC terminals; and

during said first periods controlling the at least one chain link circuit to apply a voltage to the first and second rectifier terminals so as to not reverse bias the diodes required to conduct the AC current.

The method may include any of the variants discussed herein with respect to the apparatus. In particular the method may comprise, during the identified first periods, controlling the at least one chain link circuit to provide substantially zero voltage difference across the first and second rectifier terminals.

The at least one chain link circuit may comprise a first chain link circuit connected between the high-side phase terminal and the low side phase terminal and a second chain link circuit connected in series with the diode bridge rectifier between the high-side phase terminal and the low side phase terminal and the method may comprise, during said first periods, controlling the second chain circuit to substantially cancel any voltage difference across the first and second rectifier terminals arising from the first chain link circuit.

The method may comprise operating the converter to provide a controlled power factor at a point of common coupling of a connected AC network.

To better illustrate the principles of the present disclosure various embodiments will now be described by way of example only, with reference to the accompanying drawings, of which:

Figure 1 illustrates a diode rectifier converter;

Figures 2a and 2b illustrate a diode blocking effect when the AC side voltages and currents are out of phase;

Figure 3 illustrates the effect of the diode blocking effect on system voltages and currents;

Figure 4 illustrates a simplified single line diagram of connection of a DR-VSC to an AC network;

Figure 5 illustrates an example of how the converter voltage may be controlled with respect to a target AC voltage;

Figures 6a to 6c illustrate various simulated voltage and current waveforms for a diode rectifier VSC operated with an AC current and voltage phase difference and without a control scheme according to embodiments of the disclosure; and

Figures 7a to 7c illustrate various simulated voltage and current waveforms for a diode rectifier VSC operated with an AC current and voltage phase difference and with a control scheme according to embodiments of the disclosure.

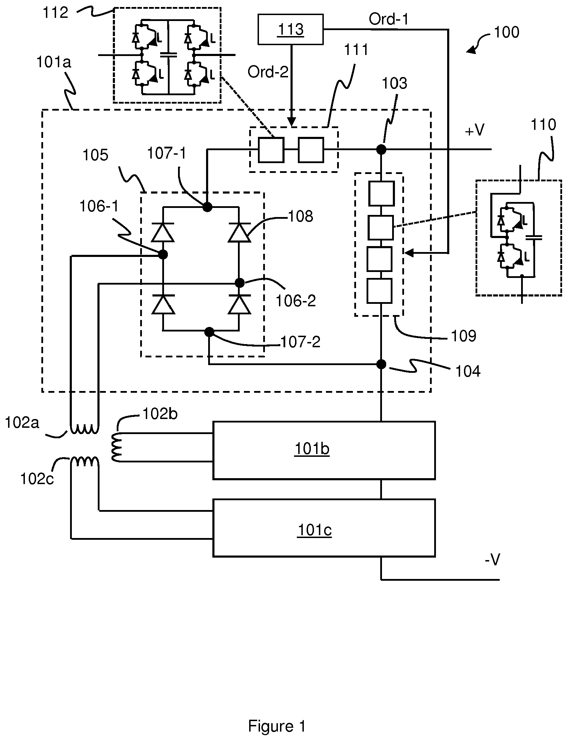

**Figure 1** illustrates a diode rectifier voltage source converter (DR-VSC) 100. The DR-VSC in this example has three phase limbs 101a-c for connecting to respective electrical phases of an AC network. Each phase limb 101a-c may be coupled to a respective winding 102a-c of a transformer. Figure 1 illustrates the main components of one of the phase limbs, 101 a, in more detail. The phase limb has a high-side phase terminal 103 and a low side phase terminal 104. In the example illustrated in figure 1, the three phase limbs 101a-c are connected in series between DC network terminals +V and -V to form a series bridge converter configuration. Thus, as illustrated, the high-side phase terminal 103 connects to DC terminal +V and the low-side phase terminal connects to a high-side phase terminal of phase limb 101b. It will be understood however that other configurations could be implemented, such as parallel phase limbs between the DC terminals.

Each phase limb comprises a diode bridge rectifier 105. The diode bridge rectifier has first and second AC terminals 106-1 and 106-2 for connecting to the AC network and also has first and second rectifier terminals 107-1 and 107-2 for connecting to the rest of the phase limb. The diode bridge rectifier 105 is configured such that each of the first and second AC terminals 106-1 and 106-2 is connected to each of the first and second rectifier terminals 107-1 and 107-2 via separate paths comprising at least one diode 108, i.e. the diode bridge rectifier is arranged in a full-bridge arrangement. Figure 1 illustrates a single diode in each path for simplicity but in practice there may be a plurality of diodes in series in each path.

The diode bridge rectifier 105 is connected between the high-side and low-side phase terminals 103 and 104 of the phase limb 101. Also connected between the high-side and low-side phase terminals 103 and 104, in parallel with the diode rectifier 105, is a first chain-link circuit 109. The first chain-link circuit 109 comprises a plurality of series connected cells 110. Each cell comprises an energy storage element, such as a capacitor, and a switch arrangement, e.g. of IGBTs, configured such that the terminals of the cell 110 can be connected in a path that either bypasses the energy storage element or includes the energy storage in element in series so as to present a defined voltage difference across the terminals. The cells 110 of the first chain link circuit 109 may be arranged in a half-bridge arrangement as would be understood by one skilled in the art, although a chain-link with at least some full-bridge cells could be used if desired.

In use, as described in WO2011/015227, the first chain link circuit 109 may be controlled to synthesise a voltage waveform at the first and second rectifier terminals 107-1 and 107-2. The voltage waveform will correspond to a rectified version of a target AC voltage waveform, i.e. an AC voltage waveform which it is wished to generate. For example the target AC waveform may be a sine wave with a desired offset from a grid side AC waveform, and thus the chain-link circuit 109 may be operated to provide a rectified sine wave at the first and second rectifier terminals. The operation of the diode bridge rectifier 105 will convert the rectified sine wave at the first and second rectifier terminals 107-1 and 107-2 to a sine wave on the AC side, e.g. across the first and second AC terminals 106-1 and 106-2 (or vice versa). Suitable control over the synthesised waveform, and hence the target AC waveform, allows power transfer from the AC network to the DC network.

In some implementations a suitable voltage waveform may be synthesised solely by a first chain link circuit 109 in parallel with the diode bridge rectifier 105. In some implementations however there may additionally or alternatively be a second chain-link circuit 111 in series with the diode bridge rectifier 105 between the high-side and low-side phase terminals 103 and 104 of the phase limb. Note that figure 1 illustrates the second chain link circuit 111 connected in series between the first rectifier terminal 107-1 and the high-side phase terminal 103. It would additionally or alternatively be possible to have cells of a second chain link converter connected between the second rectifier terminal 107-2 and the low-side phase terminal 104.

In some implementations a series connected chain link circuit 111 may be used to provide sufficient wave-shaping without requiring a parallel chain link circuit 109. In some implementations however it may be advantageous to have both a second chain link circuit 111 in series with the diode bridge rectifier 105 and also a first chain link circuit 109 in parallel with the series combination of the second chain link 111 and diode bridge rectifier 105. The first and second chain link circuits 109 and 111 may be operated together to provide a desired synthesised voltage waveform across the rectifier terminals 107-1 and 107-2 of the diode bridge rectifier. However having separate first and second chain link circuits 109 and 111 can be advantageous, especially for the series bridge converter configuration, as the first chain link circuits are connected in series and can be controlled collectively with a view to the overall voltage across the series connection of the first chain link circuits, e.g. for DC bus support, with the second chain links circuits for each phase limb being controlled to adjust the voltage across the respective diode bridge rectifier 105 to provide the required voltage. In some instances this may require the second chain link circuit 111 to be able to provide voltages of either polarity and in such a case the cells 112 of the second chain link circuit 111 may be full bridge cells able to bypass the energy storage elements or connect it in series between the cell terminals in a first configuration or a second, reversed configuration.

As noted in WO2011/015227 the use of a diode bridge rectifier 105 can allow synthesis of a high quality sine wave and thus harmonic filters or the like are not required on the AC side. As also noted the diodes of the diode bridge rectifier 105 act as automatic switching elements and thus do not need any specific control signals, reducing the control complexity and the need for switching control circuitry. It is also observed that the operation results in soft-switching of the diodes, i.e. the diodes stop conducting without any current flowing through them.

However the described operation of such a DR-VSC assumes that the AC voltage and current at the AC terminals 106-1 and 106-2 are in phase. If the DR-VSC illustrated in figure 1 were operated with purely sinusoidal AC currents and voltages at the AC terminals 106-1 and 106-2 of the phase limbs 101a-c, and with unity power factor at the diode bridge rectifier, the DR-VSC would appear to be resistive at all operating conditions. Hence the AC current and voltage at a set of AC terminals 106-1 and 106-2 would be in phase and the converter would operate as intended.

However the various phases will, as will be understood by one skilled in the art, be coupled to the AC network via the transformers 102a-c, with typically the various phases all being coupled to a point-of-common coupling (PCC) of the AC network (not shown in figure 1). At the PCC the system has a lagging phase factor and thus there is a phase displacement between the system currents and voltages at this point due to transformer leakage inductance. In this case the DR-VSC will absorb non-zero reactive power from the point-of-common coupling (PCC) of the AC network, related with the energy stored in the AC inductors of the converter. This will result in additional circulation current within the system, resulting in unnecessary power loss and requiring the DR-VSC to be rated to handle a higher current than might otherwise be the case. In this case it is not possible to control the power factor at the PCC.

It would be advantageous to be able to operate the DR-VSC to provide a controlled power factor at the PCC, for instance a power factor of unity. This would reduce the reactive current circulation and thus reduce power loss. The DR-VSC could also be rated to handle lower current which could provide cost and size savings. Size of the VSC can be a significant factor in some applications, for instance for off-shore installations where the VSC will be installed on an off-shore platform.

However if the DR-VSC were operated to provide a unity power factor at the PCC this can result in distortion of the current waveform at the AC terminals 106-1 and 106-2 of a phase limb of the DR-VSC. If the DR-VSC were operated to provide a controlled power factor at the PCC, say unity, the significant inductance between the PCC and the DR-VSC will mean that there will be a phase difference between the voltage being tracked and the current at the AC terminals 106-1 and 106-2. Such a phase difference can represent a problem for the operation of the diode bridge rectifier.

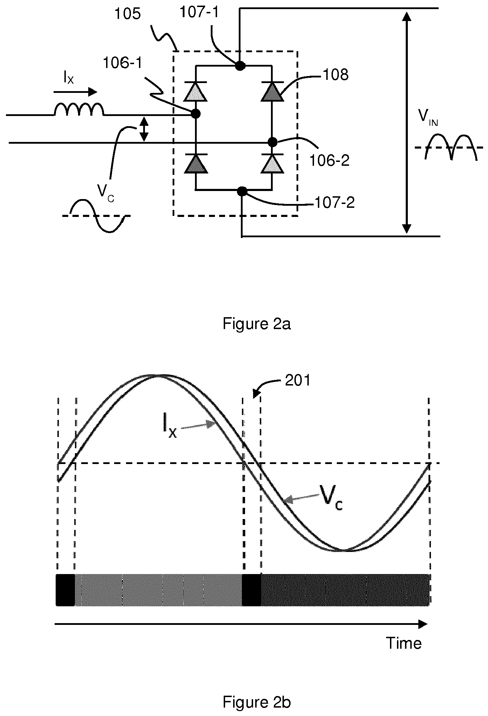

**Figures 2a and 2b** illustrate this issue. Figure 2a illustrates a diode bridge rectifier 105 such as described above. As will be understood by one skilled in the art the arrangement of the diodes 108 provides separate paths for conduction. Current flow in one sense, e.g. from first AC terminal 106-1 to the DC side with the second AC terminal 106-2 providing a return path, will be provided by one pair of diodes, e.g. those shaded in light grey. Current flow in the opposite sense, e.g. from the second AC terminal 106-2 to the DC side with the first AC terminal 106-1 providing the return path will be provided by the other pair of diodes, e.g. those shaded in dark grey. Clearly however the relevant diodes need to be forward biased to conduct, which will be the case with the operation described in WO2011/015227. However if the current $I_X$ and voltage $V_C$ at the AC terminals is out of phase, which as explained above may be expected when operating with a controlled power factor at the PCC, then there will be periods during each cycle where the voltage $V_C$ has one polarity, thus forward biasing one pair of diodes, whilst the current $I_X$ has the opposite polarity. This results in the relevant diodes being reverse biased for the required current flow. Figure 2b illustrates example current and voltage waveforms $I_X$ and $V_C$ at the AC terminals 106-1 and 106-2 and illustrates that for a portion of the positive part of the cycle and also for a portion of the negative part of the cycle, the polarity of the voltage $V_C$ and current $I_X$ will be the same and thus conduction will occur via a relevant pair of diodes. However figure 2b also illustrates that there will be periods 201 where the current $I_X$ has an opposite polarity to the voltage $V_C$ and thus the relevant diodes required for conduction will be reverse biased. In this case the diodes will actually block conduction of the AC current. This will result in a discontinuity in the AC current waveform.

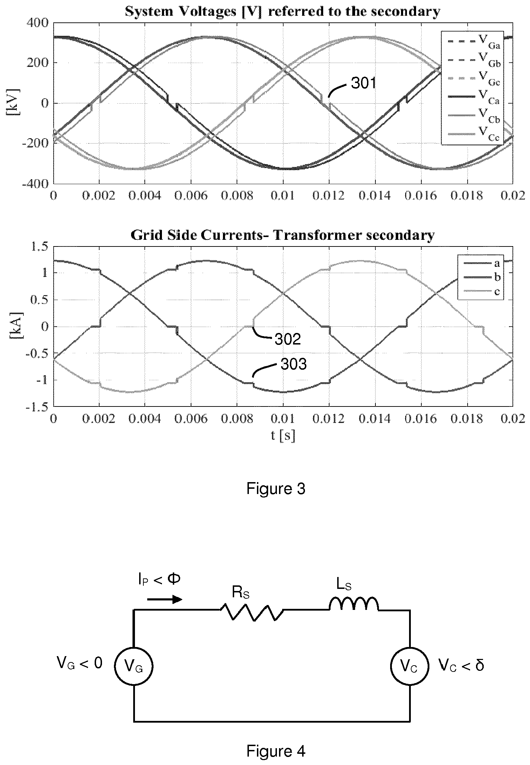

**Figure 3** illustrates the effect of this diode blocking effect. The top plot of figure 3 shows the grid side and converter AC voltages for three phases. A voltage discontinuity 301 can be seen in the converter AC voltage for each phase at the period of diode blockage. The lower plot shows the grid side AC phase currents. A clear discontinuity 302 in the AC current waveforms for a phase can been seen during the period of diode blocking. It can also be observed that for a DR-VSC such as illustrated in figure 1, a period of diode blocking for one phase also results in disturbances 303 in the current waveforms for the other phases at the same time. This can represent a significant distortion from the required AC current waveform.

Were a DR-VSC to be operated to provide a unity power factor at the PCC, or some other controlled power factor, it would thus be expected that distorted AC current waveforms would result. To implement such a system may therefore require the presence of filters to filter the AC currents to sufficiently reduce the effect of any such discontinuities. This would require additional components adding the cost, size and complexity of the converter.

Embodiments of the present disclosure relate to methods and apparatus for control of DR-VSC converters that allow for a controlled power factor at the PCC and that at least mitigate the above mentioned issues. Embodiments of the present disclosure thus allow operation of a DR-VSC such that there may be a non-zero phase difference between the current at the AC terminals of the diode bridge rectifier and the target AC voltage but control the synthesised voltage presented at the DC side of the diode bridge rectifier so to avoid the diode blocking effect. Embodiments determine when the AC current will have a different polarity to the target AC voltage and, for such a period, modify the voltage presented to the rectifier terminals of the diode bridge rectifier so as to ensure that the required diodes for conducting the current remain suitably biased, i.e. are not reverse biased. In some embodiments the voltage presented to the rectifier terminals of the diode bridge rectifier may be controlled so as to present substantially no voltage difference across the rectifier terminals during such a period. As will be explained in detail below the control apparatus and methodology provided by embodiments of the disclosure allow a DR-VSC to be operated with a controlled power factor at the PCC and provides high quality AC current waveforms without the need for filters or additional complex circuitry.

Embodiments thus relate to a DR-VSC such as illustrated in figure 1. The DR-VSC is operable to provide a controlled power factor at the PCC. This will result in a certain target AC waveform for the AC terminals 106-1 and 106-2 of the diode bridge rectifier. One skilled in the art would readily understand the considerations to determine an appropriate target AC waveform to achieve a controlled power factor at the PCC of a connected AC system.

The first and second chain link converters 109 and 111 may thus be collectively controlled to provide a synthesised voltage waveform at the rectifier terminals 107-1 and 107-2 of the diode bridge rectifier 105 that corresponds to the target AC waveform during periods where the AC current is expected to be of the same polarity as the target AC waveform. However in embodiments of the present disclosure, a controller 113 is provided that controls at least one of chain link circuits 109 and/or 111 so that during a period where the AC current at the AC terminals 106-1 and 106-2 is expected to be of opposite polarity to the target AC voltage, the voltage presented to the rectifier terminals does not reverse bias the diodes required for conduction of the AC current. In some embodiments, during such a period where the target AC voltage is of opposite polarity to the AC current, the voltage presented to the rectifier terminals 107-1 and 107-2 of the diode bridge rectifier 105 may be set to be substantially zero. Setting the voltage across the rectifier terminals to substantially zero is advantageous as the relevant diodes of the diode bridge rectifier 105 will effectively conduct automatically as required due to the AC current, avoiding the need for any kind of active control.

The period during which the target AC voltage and AC current will have a different polarity will depend on the degree of phase difference between the target AC voltage and AC current, which will depend on various aspects of the DR-VSC implementation and/or operation and also on aspects of the connected AC network.

For example, figure 4 illustrates a single line diagram of a simplified connection between the PCC of an AC system and the AC terminals of the diode bridge rectifier 105. Figure 4 illustrates that the AC grid voltage $V_G$ may be seen as voltage source connected to the AC converter voltage $V_C$ via a system reactance (illustrated as resistance $R_s$ and inductance $L_s$). To impose unity power factor at the PCC the phase angle $\Phi$ of the current $I_P$ at the PCC may be set to zero.

The AC converter voltage $V_C(t)$ may thus may defined as:

$$V_c(t) = V_c \sin(\omega t - \delta) \qquad \text{Eqn. (1)}$$

where $V_C$ is the amplitude of the converter voltage, $\delta$ is the phase shift of the converter voltage $V_C(t)$ and $\omega$ is the AC frequency. In this example where the phase angle $\Phi$ for the current is zero, the phase shift $\delta$ is thus the phase difference between the AC voltage and current.

The phase shift $\delta$ may be determined according to:

$$\delta \approx \frac{\omega L_s P_{AC}}{V_G{}^2} \qquad \text{Eqn . (2)}$$

where $P_{AC}$ is the real, or active, power flowing into the converter from the AC network.

From knowledge of the phase shift $\delta$ the period at which the AC current and the target AC voltage will have a different polarity can be determined. If the AC current leads the AC converter target voltage, the AC current and voltage will have opposite polarity for a period starting at a zero crossing of the current and extending for a duration defined by $\delta$. There are various ways in which such a period could be determined. In some examples the period could be defined based on a known phase angle. Additionally or alternatively a measurement of AC current could be used to determine the timing of zero crossings. Conveniently however in some embodiments the controller 113 may be arranged to modify a voltage order to at least one of the chain links 109 and/or 111 based on an indication of the voltage of the target waveform.

As mentioned above, if the AC current leads the target AC voltage, then at the end of the positive half of the AC cycle the AC current will cross zero and become negative whilst the target AC voltage is still non-zero and positive. The target AC voltage at the point that this occurs can be approximated as:

$$V_c|_\delta \approx V_c \delta \qquad \text{Eqn. (3)}$$

Likewise at the end of the negative half of the AC cycle the AC current will cross zero whilst the AC voltage is still negative, at an AC target voltage of effectively the same magnitude.

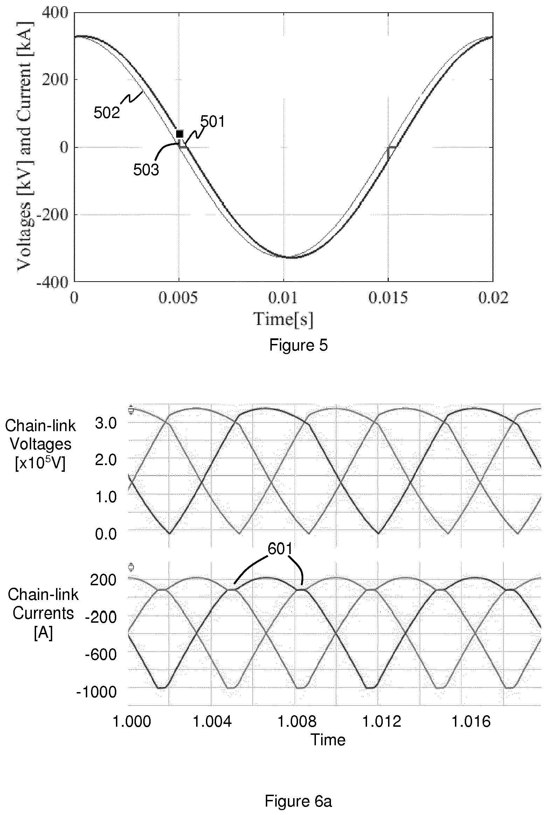

**Figure 5** illustrates the principle of control according to embodiments. Figure 5 illustrates the target AC waveform 501 as well as the AC current 502. As can be seen, in this example due to the operation of the DR-VSC, the AC current leads the target AC voltage. The chain link circuits 109 and 111 of the DR-VSC are controlled so as to control the converter AC voltage Vc 503 so as to match the target AC voltage over most of the cycle. However at a certain point in time, illustrated by the black square point, the converter voltage 503 is stepped to be substantially zero. This point in time corresponds to a time at which, or shortly before, it is expected that the AC current becomes negative. This corresponds to a certain converter voltage magnitude. The converter voltage is kept substantially zero for a duration long enough that the target AC voltage also crosses zero, at which point the converter voltage is again controlled to match the target AC voltage. For the end of the negative cycle the same happens, at a time or target AC voltage magnitude expected to correspond to the zero crossing of the AC current.

It will be appreciated that the discussion above has focussed on a zero phase angle for the AC current at the PCC to provide a unity power factor at the PCC. It will be appreciated that in some implementations other power factors may be implemented at the PCC and a different phase angle $\Phi$ may be used, however the phase difference between the AC voltage and current can still be determined using similar principles as would be understood by one skilled in the art.

The controller 113 may thus determine when the target AC voltage would have a different polarity to the target AC voltage.

The controller 113 may be configured to control the first chain link circuit 109 and/or second chain link circuit 111 to provide substantially zero voltage difference across the rectifier terminals 107-1 and 107-2 in a variety of ways.

In implementations with just a first chain link circuit 109 in parallel with the diode bridge rectifier 105, the controller may simply control the chain link circuit 109 to output a voltage of zero. In implementations with just one chain link controller 111 in series with the diode bridge rectifier 105, the chain link controller 111 may be controlled to effectively negate any existing voltage difference between high-side phase terminal 103 and low-side phase terminal 104.

As mentioned above however it may be advantageous for implementations to have both first and second chain links circuits 109 and 111 as illustrated in figure 1. As mentioned this can be useful, in that the first chain link circuit 109 can be controlled with respect to the first chain link circuits of other phase limbs so that the first chain link circuits collectively support the DC bus and to limit any disturbances of the DC network.

In embodiments of the present invention the first chain link circuit 109 may be controlled according to a first voltage order Ord-1, where the first voltage order takes into account the required target AC waveform for the relevant phase but wherein the first voltage orders for the first chain link converters for the various phases are also controlled to provide an overall converter performance. The second chain link circuit 111 of each phase limb may be controlled by a respective second voltage order Ord-2. The second voltage order is defined with respect to the first voltage order such that the voltage across the second chain link circuit 111 combines with the voltage across the first chain link circuit 109 to provide a resultant desired voltage across the rectifier terminals 107-1 and 107-2.

For operation during a period where the polarity of the AC current and AC target voltage are the same, the controller 113 may provide the second voltage order Ord-2 such that the resultant voltage across the diode bridge rectifier 105 matches a rectified version of the target AC voltage. However for a period when it is determined that the AC target voltage and AC current may be of opposite polarity, the second voltage order Ord-2 is effectively controlled or modified such that voltage of the second chain link circuit 111 effectively cancels any voltage difference due to the first chain link circuit 109.

Thus in the event that, at a time that the AC target voltage and current are determined to be of opposite polarity, the first chain link circuit 109 is being used to provide an output voltage so as to support the DC bus, the second chain link circuit 111 may be controlled to provide a voltage to effectively cancel the voltage of the first chain link circuit 109. That is the second chain link circuit 111 may be controlled such that the voltage drop between the high side phase terminal 103 and the first rectifier terminal 107-1 across the second chain link circuit 111 is the same as the voltage drop between the high side phase terminal 103 and low side phase terminal 104 across the first chain link circuit 109.

However in the event that the first chain link circuit 109 is not being used to provide an output voltage at a time that the AC target voltage and current are determined to be of opposite polarity, the second chain link circuit 111 may be controlled to likewise provide no voltage.

To illustrate the benefits of the control apparatus and methodology set out in this disclosure, a DR-VSC was simulated and tested, providing a controlled power factor at the PCC, both with and without the active diode conduction control described herein.

Figures 6a-6c show various voltage and current waveforms as would be experienced by operating the DR-VSC so that the first and second chain link converters operate to produce the required target AC voltage over the whole cycle.

Figure 6a illustrates the voltage (top plot) and current waveforms (lower plot) for the first chain link circuit 109 of each of the three phases. The voltage output from the first chain link circuit 109 of each phase limb ramps up and down based on the required rectified voltage waveform for that phase. The voltage range of the first chain link circuit 109 is typically arranged to be greater than that of the second chain link circuit 111 and the first chain link circuit can, in some respects, be thought of as providing a coarse voltage waveform to form the basis of the synthesised voltage applied to the diode bridge rectifier 105. The voltage of each first chain link circuit 109 is also controlled with respect to the voltages of the other first chain link circuits to support the DC terminals at desired voltage levels and to avoid undue disturbance of th DC system.

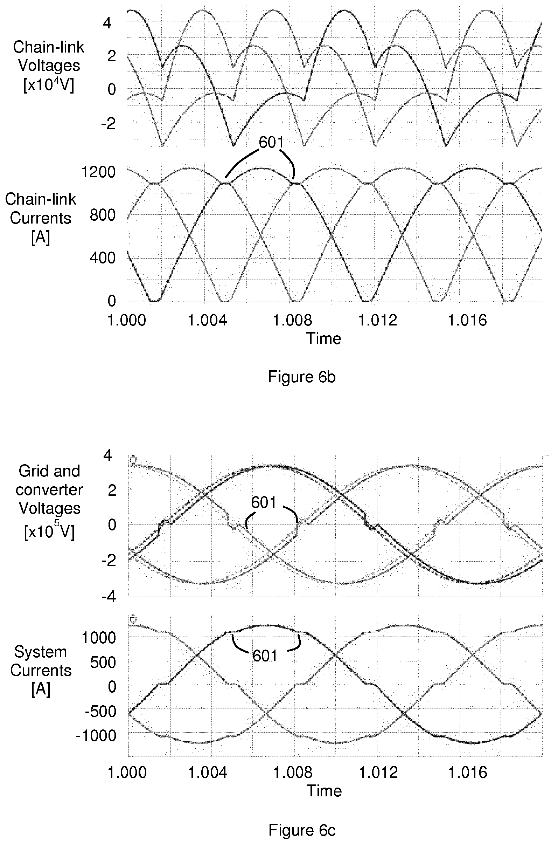

Figure 6b illustrates the voltage (top plot) and current waveforms (lower plot) for the second chain link circuits 111 of each of the three phases. As mentioned above the voltage of the second chain link circuit 111 may be varied, in this example between positive and negative voltages, to modify the voltage difference provided by the first chain link circuit 109 so as to provide the desired voltage across the diode bridge rectifier 105.

In this example the voltages output by the first chain link circuit 109 and the second chain link circuit 111 are controlled so that the synthesised voltage waveform applied to the rectifier terminals 107-1 and 107-2 is a high quality rectified sine wave. Such waveforms would, if the DR-VSC were operated in a resistive mode, provide a high quality sine wave at the AC terminals.

As discussed above however ,when the DR-VSC is controlled to provide a controlled power factor at the PCC, there is a phase difference between the AC voltage and the AC current at the AC terminals 106-1 and 106-2 of the diode bridge rectifier 105, which can result in the diode blocking effect described previously.

Figure 6c illustrates, in the top plot, the resultant AC voltage waveforms for each phase (solid line) and the corresponding grid AC voltage (dashed line). The lower plot of figure 6c shows the corresponding converter side AC currents. Disturbances 601 in the AC current waveforms can clearly be seen, with a relatively significant distortion of the AC waveform. This diode blocking effect also impacts the converter AC voltage for each phase. This diode blocking effect also impacts the arm currents within the various phase limbs. Referring back to figures 6a and 6b disturbances can be seen in the current flow in the first and second chain link circuits 109 and 111.

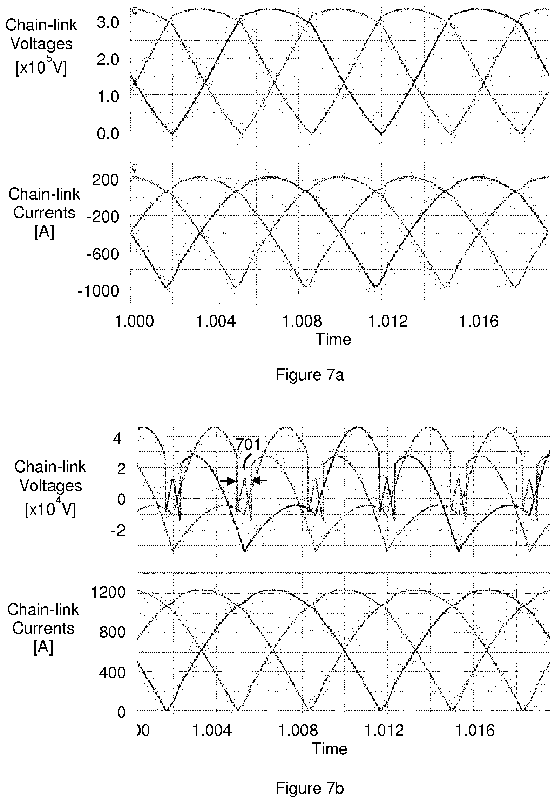

Figures 7a-c illustrates simulated waveforms for the same converter operating conditions, but in this case where the first and chain link circuits are controlled to match the target AC waveform when the polarity of the target AC waveform is the same as the AC current but to reduce the voltage applied to the rectifier terminals 107-1 and 107-2 to substantially zero when the AC current is expected to be of the opposite polarity to the target AC waveform. Figures 7a to 7c thus illustrate the voltage waveforms when implementing an active diode conduction control using the chain link circuits 109 and 111 according to embodiments of the disclosure.

Figure 7a shows the voltage (top plot) and current waveforms (lower waveforms) for the first chain link circuits 109 of each phase. In this example the first voltage order, Ord-1, to the first chain link circuits 109 is the same as the voltage order used for the example illustrated in figures 6a-c. In other words the control of the first chain link circuits 109 is not varied. The voltages for the first chain link circuits 109 thus likewise are based on the voltage required for the target AC voltage and also provide the required DC bus support.

Figure 7b shows the voltages (top plot) and currents (lower plot) for the second chain link converters 111. In this instance the operation of the second chain link converters 111 is modified compared to the operation illustrated in figure 6b. In particular during periods 701 the second voltage order for second chain link circuit 111 is modified compared to the operation illustrated in figure 6b so to provide a voltage that cancels any voltage of the first chain link circuit 109. In this example, during the relevant period, the voltage of the first chain link circuit 109 is itself varying, dropping and then rising again, and thus the voltage of the second chain link 111 circuit is likewise controlled to match the changing the voltage of the first chain link circuit 109.

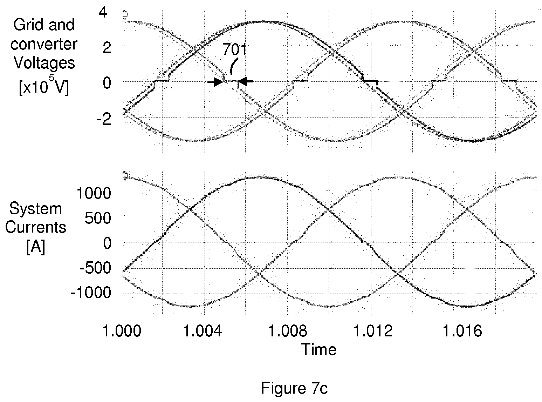

The result is that during the periods 701 the resultant AC converter waveform has substantially zero voltage, as illustrated in figure 7c which shows the grid (dashed line) and converter (solid line) AC voltages as the top plot and the system AC converter current in the lower plot. The periods 701 for each phase are timed to correspond to period during which the AC current and target AC voltage on the converter side would (otherwise) have opposite polarity. It can be seen that by setting the AC converter voltage to zero during such periods the effect on AC current conduction is substantially reduced. The AC current waveform of figure 7c exhibits significantly less distortion than the equivalent of figure 6c. Likewise the effect on the arm currents through the chain link circuits 109 and 111 is reduced.

Such operation thus avoids or substantially reduces the requirements for any filtering. The controller thus actively controls the chain link circuits 109 and 111 to control the conduction of the diodes of the diode bridge rectifier 105 to avoid any significant discontinuity in AC conduction. As the control method may simply modify the voltage order to the chain link circuits, and in the example discussed above only modifies the voltage order to the second chain link circuit 111 in series with the diode bridge rectifier, the control can be implemented relatively easily.

Embodiments thus allow a DR-VSC to operate with unity power factor, or some other controlled power factor, at the PCC with limited current distortion in the AC system. Embodiments thus provide high quality AC waveforms but with a controllable power factor. This also has no effect on the converter ratings, i.e. there is no need to overrate the converter to compensate for the reactive power of the converter AC side impedance. Further embodiments use the existing hardware of the DR-VSC and thus do not require significant additional components.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

**Claims**

1.  A voltage source converter (100) comprising:

    at least one phase limb (101 a) comprising:

    a high side phase terminal (103) and a low side phase terminal (104);
    a diode bridge rectifier (105) having first and second AC terminals (106-1, 106-2) for connecting the phase limb to an AC network, each of the first and second AC terminals being connected to each of the first and second rectifier terminals (107-1, 107-2) via one or more diodes (108);
    at least one chain-link circuit (109, 111) comprising a plurality of series connected cells (110, 112) that can be controllably switched to generate a controlled voltage across the chain link circuit, the chain link circuit being coupled to at least one of the first and second rectifier terminals;
    wherein the voltage source converter is operable such that, in use, an AC voltage at the first and second AC terminals (107-1, 107-2) may be out of phase with an AC current at the first and second AC terminals (107-1, 107-2); and

wherein the voltage source converter further comprises a controller (113) for controlling the at least one chain link circuit so as to generate a voltage across the first and second rectifier terminals (107-1, 107-2) so as to generate an AC waveform at the first and second AC terminals (107-1, 107-2) based on a target AC waveform; and

wherein the controller (113) is configured to identify first periods during which the target AC waveform would be of the opposite polarity to the AC current at the first and second AC terminals (107-1, 107-2) and, during said first periods, to control the at least one chain link circuit (109, 111) to apply a voltage to the first and second rectifier terminals (107-1, 107-2) so as to not reverse bias the diodes required to conduct the AC current.

2. A voltage source converter as claimed in claim 1, wherein the controller (113) is configured to control the at least one chain link circuit (109, 111) so as to apply substantially no voltage difference across the first and second rectifier terminals (107-1, 107-2) during said first periods.

3. A voltage source converter as claimed in claim 1 or claim 2, wherein the at least one chain link circuit comprises a first chain link circuit (109) connected between the high-side phase terminal (103) and the low side phase terminal (104) and a second chain link circuit (111) connected in series with the diode bridge rectifier (105) between the high-side phase terminal (103) and the low side phase terminal (104).

4. A voltage source converter as claimed in claim 3, wherein during said first periods, the controller (113) is configured to control the second chain circuit (111) to substantially cancel any voltage difference across the first and second rectifier terminals (107-1, 107-2) arising from the first chain link circuit (109).

5. A voltage source converter as claimed in claim 3 or claim 4, wherein during periods when the target AC voltage is of the same polarity as the AC current, the controller is configured to control the first chain link circuit (109) and the second chain circuit (111) so as to collectively provide a voltage across the first and second rectifier terminals (107-1, 107-2) that is a rectified version of the target AC waveform.

6. A voltage source converter as claimed in any of claims 3 to 5, wherein the first chain link circuit (109) comprises cells having an energy storage element and a half-bridge switch arrangement and the second chain link circuit comprises cells having an energy storage element and a full-bridge switch arrangement.

7. A voltage source converter as claimed in any preceding claim, comprising a plurality of phase limbs (101a), wherein the phase limbs are connected in series between high-side and low-side DC terminals (103, 104).

8. A voltage source converter as claimed in claim 7, when dependent directly or indirectly on claim 3, wherein the controller (113) is configured to control the first chain link circuits (109) of the phase limbs (101 a) to maintain the DC voltages and the high-side and low-side DC terminals (103, 104) with defined limits.

9. A voltage source converter as claimed in any preceding claim, wherein the voltage source converter is operable to provide a controlled power factor at a defined point of a connected AC network.

10. A voltage source converter as claimed in claim 9, wherein the defined point of the connected AC network is a point of common coupling.

11. A voltage source converter as claimed in claim 9 or claim 10, wherein the controlled power factor is a power factor of unity.

12. A method of controlling a voltage source converter (100) comprising:

at least one phase limb (101 a) comprising:

a high side phase terminal (103) and a low side phase terminal (104);
a diode bridge rectifier (105) having first and second AC terminals (106-1, 106-2) connecting the phase limb to an AC network, each of the first and second AC terminals being connected to each of the first and second rectifier terminals (107-1, 107-2) via one or more diodes (108);
at least one chain-link circuit (109, 111) comprising a plurality of series connected cells (110, 112) that can be controllably switched to generate a controlled voltage across the chain link circuit (109, 111), the chain link circuit being coupled to at least one of the first and second rectifier terminals (107-1, 107-2);

wherein the method comprises:

controlling the at least one chain link circuit (109, 111) so as to generate a voltage across the first and second rectifier terminals (107-1, 107-2) so as to generate an AC waveform at the first and second AC terminals (106-1, 106-2) based on a target AC waveform wherein the AC voltage at the first and second AC terminals (106-1, 106-2) is out of phase with an AC current at the first and second AC terminals (106-1, 106-2);

identifying first periods during which the target AC waveform would be of the opposite polarity to the AC current at the first and second AC terminals (106-1, 106-2); and

during said first periods controlling the at least one chain link circuit (109, 111) to apply a voltage to the first and second rectifier terminals (107-1, 107-2)so as to not reverse bias the diodes required to conduct the AC current.

13. A method as claimed in claim 12, wherein the method comprises, during said first periods, controlling the at least one chain link circuit (109, 111) to provide substantially zero voltage difference across the first and second rectifier terminals (107-1, 107-2).

14. A method as claimed in claim 12 or claim 13, wherein the at least one chain link circuit comprises a first chain link circuit (109) connected between the high-side phase terminal (103) and the low side phase terminal (104) and a second chain link circuit (111) connected in series with the diode bridge rectifier (105) between the high-side phase terminal (103) and the low side phase terminal (104) and the method comprises, during said first periods, controlling the second chain circuit (111) to substantially cancel any voltage difference across the first and second rectifier terminals (107-1, 107-2) arising from the first chain link circuit (109).

15. A method as claimed in any of claims 12 to 14, comprising operating the converter to provide a controlled power factor at a point of common coupling of a connected AC network.

Figure 1

Figure 2a

Figure 2b

Figure 3

Figure 4

Figure 5

Figure 6a

Figure 6b

Figure 6c

Figure 7a

Figure 7b

Figure 7c

Europäisches
Patentamt
European
Patent Office
Office européen
des brevets

# EUROPEAN SEARCH REPORT

Application Number

EP 17 18 6029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2011/015227 A1 (AREVA T & D UK LTD [GB]; TRAINER DAVID [GB]; DAVIDSON COLIN CHARNOCK []) 10 February 2011 (2011-02-10) * the whole document * | 1-15 | INV. H02M1/42 H02M7/483 H02M7/217 |
| Y | EP 2 916 447 A1 (ALSTOM TECHNOLOGY LTD [CH]) 9 September 2015 (2015-09-09) * paragraphs [0072], [0073]; figures 1a,4 * | 1-15 | |
| Y | YANG JIE ET AL: "DC Voltage Compensation Strategy for Parallel Hybrid Multilevel Voltage-Source Converter", IEEE TRANSACTIONS ON POWER DELIVERY, IEEE SERVICE CENTER, NEW YORK, NY, US, vol. 31, no. 2, 1 April 2016 (2016-04-01), pages 465-474, XP011604124, ISSN: 0885-8977, DOI: 10.1109/TPWRD.2015.2435796 [retrieved on 2016-03-22] * paragraph [00IB]; figures 1,2 * | 1-15 | |
| A | TRAINER D R ET AL: "B4-111 A new Hybrid Voltage-Sourced Converter for HVDC Power Transmission", CIGRE SESSION, CIGRE, PARIS, FR, 23 August 2010 (2010-08-23), pages 1-12, XP008134692, | 1,12 | TECHNICAL FIELDS SEARCHED (IPC) H02M |

The present search report has been drawn up for all claims

| Place of search | Date of completion of the search | Examiner |
|---|---|---|
| The Hague | 9 February 2018 | Imbernon, Lisa |

EPO FORM 1503 03.82 (P04C01)

## ANNEX TO THE EUROPEAN SEARCH REPORT
## ON EUROPEAN PATENT APPLICATION NO.

EP 17 18 6029

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2018

| Patent document cited in search report | | Publication date | Patent family member(s) | | Publication date |
|---|---|---|---|---|---|
| WO 2011015227 | A1 | 10-02-2011 | CN | 102577066 A | 11-07-2012 |
| | | | EP | 2462687 A1 | 13-06-2012 |
| | | | US | 2012188803 A1 | 26-07-2012 |
| | | | WO | 2011015227 A1 | 10-02-2011 |
| EP 2916447 | A1 | 09-09-2015 | CN | 106464160 A | 22-02-2017 |
| | | | EP | 2916447 A1 | 09-09-2015 |
| | | | US | 2017077834 A1 | 16-03-2017 |
| | | | WO | 2015132310 A1 | 11-09-2015 |

**EP 3 442 104 A1**

## REFERENCES CITED IN THE DESCRIPTION

### Patent documents cited in the description

- WO 2011015227 A